Europäisches Patentamt

European Patent Office

Office européen des brevets

(11) Numéro de publication: **0 390 645**

**A1**

(12) **DEMANDE DE BREVET EUROPEEN**

(21) Numéro de dépôt: 90400767.1

(22) Date de dépôt: **20.03.90**

(51) Int. Cl.⁵: **H04L 25/49**

(30) Priorité: **28.03.89 FR 8904017**

(43) Date de publication de la demande:
**03.10.90 Bulletin 90/40**

(84) Etats contractants désignés:
**AT BE CH DE ES GB IT LI NL**

(71) Demandeur: **JS TELECOM**
**36-38, rue de la Princesse**
**F-78430 Louveciennes(FR)**

(72) Inventeur: **Le Comte, Michel L.**
**6 Bis rue des Closeaux**
**F-91440 Bures S/ Yvette(FR)**

(74) Mandataire: **Levesque, Denys et al**
**Cabinet Beau de Loménie 55, rue**
**d'Amsterdam**
**F-75008 Paris(FR)**

(54) **Procédé et dispositif de réduction du bruit sur un signal codable à plusieurs niveaux prédéterminés.**

(57) L'invention concerne le filtrage d'un signal numérique périodique à N (supérieur ou égal à 2) niveaux logiques auquel est superposé du bruit. La probabilité instantanée d'existence de chaque niveau logique ("0", "1", "2", ...) est traduite sous la forme de N signaux ayant une amplitude maximale lorsque la valeur modulée du signal instantané reçu est égale à la valeur normale de ce niveau logique, amplitude qui décroît, de par l'application d'un coefficient de prise en compte (CPC), lorsque la valeur instantanée reçue s'écarte de la valeur normale de ce niveau logique, la succession de ces amplitudes relative à chaque niveau logique recherché étant intégrée pendant la durée de la période élémentaire de modulation du signal numérique reçu, le niveau logique reconnu étant celui correspondant à celui pour lequel l'intégrale est la plus grande.

Fig-2

EP 0 390 645 A1

## Procédé et dispositif de réduction du bruit sur un signal codable à plusieurs niveaux prédéterminés

L'invention se rapporte tout d'abord à un procédé de réduction du bruit affectant un signal numérique transmis à fréquence fixe et codable suivant plusieurs niveaux quantifiés possibles, par filtrage du signal perturbé par le bruit, puis intégration du signal filtré durant chaque période élémentaire de codage.

On sait que la sensibilité d'un récepteur est en général limitée par la présence de bruit induit sur le support de transmission depuis l'émetteur de signal, ainsi que dans les circuits amplificateurs du récepteur. Le bruit de l'étage d'entrée d'un récepteur opto-électronique, destiné à une liaison par fibre optique, limite la portée de celle-ci. L'un des moyens connus de se prémunir du bruit est de protéger autant que possible le support de transmission, de faire appel à des composants électroniques peu bruyants et d'utiliser un filtre éliminant les fréquences dans la ou les bandes où il ne peut y avoir de signal (ou seulement une fraction résiduelle). Une autre technique consiste à diminuer la vitesse de modulation du signal codé, ce qui améliore le rapport signal à bruit mais limite la performance de la transmission. Cependant, le bruit présent dans la bande de fréquences du signal n'est pas éliminé.

La présente invention vise à réduire le bruit, afin par exemple d'augmenter la portée d'une liaison, dans le cas où il s'agit d'un signal codé émis à une fréquence fixe de modulation.

A cet effet, selon l'invention, on applique, au signal perturbé par le bruit, un filtrage en amplitude qui, dans chaque voie de filtrage relative à chaque niveau quantifié du signal, favorise les amplitudes voisines du niveau quantifié considéré, au détriment des amplitudes qui en diffèrent, par excès ou par défaut. Le mot "amplitude" doit être considéré au sens large de "valeur" d'une grandeur physique qui peut être codée à plusieurs valeurs; ce peut être une amplitude au sens ordinaire du terme, une fréquence, une phase ou tout autre état ou combinaison d'états modulables d'une grandeur physique.

Grâce à cette disposition, les composantes de bruit, qui se superposent au signal et en modifient momentanément l'amplitude, laquelle correspond - pendant chaque période élémentaire de codage - à l'un des niveaux quantifiés que peut prendre le signal, sont atténuées par rapport à ce niveau, de sorte que le rapport signal à bruit s'en trouve amélioré. En particulier, dans le cas d'un parasite bref de grande amplitude masquant momentanément le signal utile, seule une fraction de ce parasite, déterminée par la loi de filtrage en amplitude, est soumise à intégration; mais du fait de son énergie résiduelle réduite, l'effet du parasite après intégration se trouve considérablement diminué.

Plus particulièrement, le filtrage consiste à affecter au signal, lors de ses fluctuations autour du niveau quantifié, un coefficient de prise en compte traduisant la probabilité pour que l'amplitude instantanée du signal perturbé par le bruit provienne du niveau quantifié considéré, après adjonction de bruit, le coefficient de prise en compte étant maximal pour une amplitude égale audit niveau quantifié ou voisine de ce dernier, et décroissant à mesure que l'amplitude s'écarte dudit niveau par valeur supérieure ou inférieure, et à soumettre le signal résultant à une intégration durant chaque période élémentaire. Le signal est appliqué à une batterie d'autant de dispositifs de filtrage et d'intégration qu'il y a de niveaux quantifiés, disposés en parallèle; le niveau de codage retenu en fin de chaque période élémentaire est celui pour lequel le résultat de l'intégration est le plus grand parmi ceux correspondant aux différents niveaux quantifiés.

De préférence, le coefficient de prise en compte varie, en fonction de l'amplitude du signal, suivant une courbe à concavité tournée vers le haut de part et d'autre de sa valeur maximale, avec une petite plage constante au voisinage de son maximum.

Il convient d'autre part que le coefficient de prise en compte relatif à un niveau quantifié déterminé soit voisin de sa valeur minimale pour les amplitudes du signal instantané plus proches d'un autre niveau quantifié.

L'invention a également pour objet un dispositif permettant de mettre en oeuvre le procédé défini ci-dessus. Ce dispositif comporte :

- des circuits de filtrage en amplitude auxquels le signal perturbé est appliqué, en nombre égal à celui des niveaux quantifiés, chacun comprenant un amplificateur dont la courbe de réponse en fonction de l'amplitude d'entrée présente un maximum pour l'amplitude d'entrée égale au niveau quantifié considéré, avec une petite plage fixe autour dudit maximum, et une décroissance monotone de part et d'autre du maximum,

- des circuits d'intégration des signaux filtrés issus desdits amplificateurs, chacun étant associé à un circuit de filtrage, et

- un circuit comparateur effectuant la comparaison de l'ensemble des signaux intégrés et indiquant, à la fin de chaque période élémentaire du signal, le niveau de codage le plus probable de ce signal dans cette période.

De préférence, le dispositif comporte en outre deux circuits auxiliaires produisant deux tensions de référence faisant office de suiveurs de niveaux logiques, lesquelles sont appliquées à l'amplificateur de chaque voie de filtrage. Ces tensions de référence servent à asservir le seuil de référence des différents niveaux quantifiés du signal aux variations lentes de niveau dues à la transmission.

Dans une forme de réalisation avantageuse, l'amplificateur de chaque circuit de filtrage comprend :

- un premier amplificateur non linéaire, à gain nul puis croissant de plus en plus vite lorsque l'amplitude d'entrée croît de la moitié jusqu'à la totalité de la valeur du niveau quantifié considéré,
- un deuxième amplificateur non linéaire à gain décroissant de moins en moins vite lorsque l'amplitude d'entrée croît au delà de la valeur du niveau quantifié considéré, lesdits premier et deuxième amplificateurs non linéaires recevant tous deux le signal à filtrer, et
- un amplificateur ayant aussi une entrée à commande de gain, dont l'entrée de signal est attaquée par le premier amplificateur non linéaire et dont le gain est commandé par le deuxième amplificateur non linéaire,

le signal filtré en amplitude étant disponible à la sortie de l'amplificateur à commande de gain, tandis que la tension de référence respective ou une fraction de celle-ci est de préférence appliquée au deuxième amplificateur non linéaire de chaque voie de filtrage.

Quant au circuit d'intégration, il est composé de plusieurs intégrateurs, chacun recevant la sortie du circuit de filtrage respectif. En variante, dans le cas d'un signal à codage binaire, le circuit d'intégration peut être formé d'un unique intégrateur commun aux deux voies de filtrage et actionné symétriquement en sens opposés par les signaux de sortie de celles-ci, le circuit comparateur effectuant la comparaison du signal issu de cet intégrateur et d'une tension de repos à laquelle est chargé cet intégrateur en début de chaque période élémentaire.

Selon une autre caractéristique de l'invention, le dispositif peut comporter en outre un circuit assurant l'addition, au signal à filtrer, d'une tension de correction d'erreur proportionnelle au dernier écart constaté entre l'amplitude théorique quantifiée et l'amplitude réelle, après filtrage HF, ceci pour chaque niveau quantifié du signal, écarts déterminés par un circuit soustracteur, cette tension de correction d'erreur imprimant au signal un décalage qui tend à réduire l'ampleur desdits écarts lors de la période suivante.

D'autres particularités et avantages de l'invention ressortiront de la description qui va suivre, en regard des dessins annexés, d'exemples de réalisation non limitatifs.

La figure 1 est un schéma montrant l'organisation générale d'un circuit de réduction du bruit selon l'invention, dans le cas d'un signal à deux niveaux de codage.

La figure 2 représente les courbes de réponse amplitude/amplitude des différentes voies de filtrage du circuit de la figure 1.

La figure 3 représente, à la manière de la figure 1, un circuit selon l'invention, adapté à un signal à trois niveaux de codage.

La figure 4 est un schéma montrant la structure d'une voie de filtrage en amplitude du circuit de la figure 1.

La figure 5 est un schéma détaillé de l'amplificateur d'une voie de filtrage d'un circuit selon l'invention.

La figure 6 représente la courbe de réponse amplitude/amplitude de l'amplificateur de la figure 5.

La figure 7 est un diagramme illustrant le comportement du circuit selon l'invention en présence d'un signal utile chargé de bruit.

La figure 8 représente schématiquement une variante de circuit pour signal codé à deux niveaux, ne comprenant qu'un seul intégrateur.

La figure 9 montre les variations du coefficient de prise en compte dans le circuit de la figure 8.

La figure 10 représente schématiquement une variante de circuit dans laquelle est assurée la compensation du bruit à basse fréquence affectant un signal codé à deux niveaux.

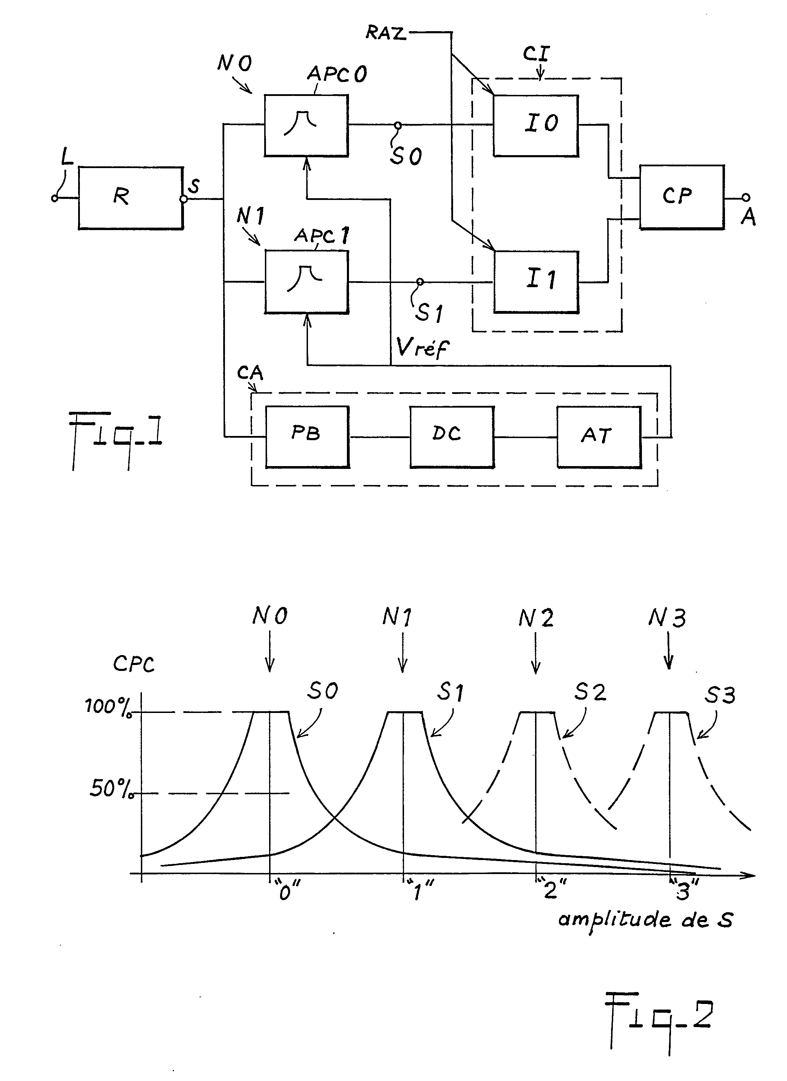

On voit sur la figure 1 un récepteur R qui délivre, reçu d'une voie de transmission L, un signal codé S modulé à rythme fixe, pouvant prendre deux niveaux de tension correspondant aux niveaux logiques 0 et 1 du message codé véhiculé par le signal S. Ce signal est en pratique perturbé par des bruits et parasites divers dont il s'agit de réduire l'influence sur l'exactitude de la reconnaissance des niveaux 0 et 1. A cet effet, le signal S est appliqué à une première voie N0, affectée à la reconnaissance du niveau "0" et à une deuxième voie N1 affectée à la reconnaissance du niveau "1". Chacune des voies Ni, soit N0 et N1, comprend un amplificateur non linéaire APCi qui offre un facteur d'amplification maximale pour le niveau 0 (ou 1) à la reconnaissance duquel la voie est affectée, le facteur d'amplification décroissant lorsque l'amplitude du signal S s'écarte de ce niveau en devenant aussi bien supérieur qu'inférieur à celui-ci. Chaque amplificateur APCi constitue ainsi un "filtre d'amplitude", favorisant un niveau d'entrée déterminé par rapport à tous autres niveaux, qui applique au signal S un coefficient de prise en compte" CPC variable en fonction de l'amplitude de ce signal. Comme le montre la figure 2, ce coefficient est de 100 % pour le niveau 0 (ou 1) à reconnaître, et décroît de part et d'autre de ce niveau, d'abord rapidement, puis moins vite, suivant deux branches de courbe à concavité tournée vers le haut.

Le signal Si de sortie de l'amplificateur APCi de chaque voie N0, N1 est appliqué à un intégrateur Ii, appartenant à un circuit d'intégration CI, qui cumule la succession continue des quantités d'électricité reçues de l'amplificateur APCi, proportionnelles aux différentes amplitudes successives que prend le signal Si lors de la durée de la période élémentaire. Les intégrateurs Si sont remis à zéro par une impulsion RAZ en début de chaque période élémentaire du signal S, déterminé par une horloge locale H asservie au signal reçu dans le cas d'une transmission synchrone, ou à partir d'un changement d'état confirmé dans le cas d'une transmission asynchrone. Leurs bornes de sortie sont reliées à un comparateur CP qui fait apparaître, à sa sortie A, un signal "0" ou "1" suivant que c'est l'intégrateur de la voie N0 ou de la voie N1 qui fournit un résultant prépondérant par rapport à celui de l'autre intégrateur, c'est-à-dire qui s'est chargé le plus par rapport à son état de repos. Les constantes de temps des deux voies sont identiques, pour pouvoir comparer valablement les niveaux reçus.

Le signal S est appliqué en outre à un circuit auxiliaire CA comprenant successivement un filtre passe-bas PB, un détecteur de crête DC et un atténuateur AT, qui délivre une tension de référence Vréf égale au niveau "1" du signal S, laquelle est appliquée comme seuil à l'amplificateur APC1, pour commander la retombée du signal. APC0 reçoit le niveau logique "0", supposé égal à 0 volt dans cet exemple.

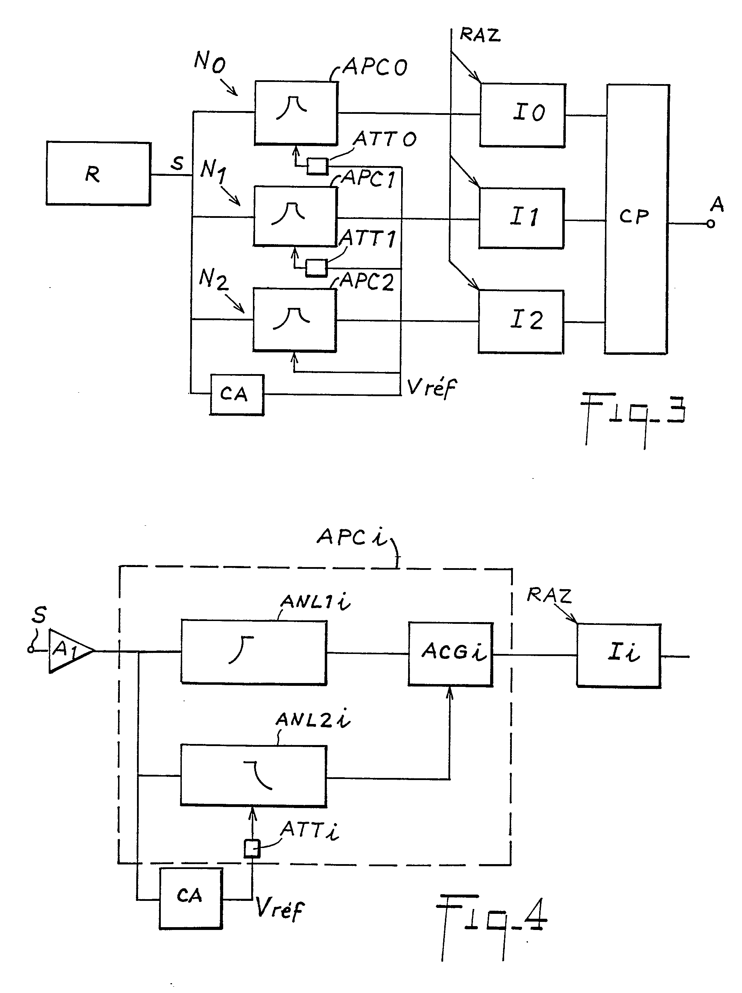

Lorsque le signal S peut prendre plus de deux niveaux quantifiés, on l'applique à des voies N0, N1, N2, ... en nombre correspondant (figure 3), offrant des courbes de filtrage en amplitude décalées (figure 2), chacune comprenant un amplificateur non linéaire APCi qui reçoit, via un atténuateur ATTi respectif, une tension de référence égale à celle du niveau logique correspondant, et un intégrateur Ii remis à zéro périodiquement par un signal RAZ, en début de chaque période élémentaire, les bornes de sortie des intégrateurs Ii étant reliées à un comparateur CP qui effectue la comparaison de leurs tensions d'intégration respectives afin de faire apparaître à sa sortie A le niveau logique qui correspond au résultat prépondérant.

Le comparateur est constitué d'une arborescence de comparateurs analogiques à deux entrées, fournissant un signal 0 ou 1 selon l'entrée de plus forte valeur. Ce bit commande un aiguilleur, recevant ces deux mêmes valeurs, qui transmet à sa sortie le signal le plus élevé. Cette sortie attaque une deuxième couche de comparateurs et aiguilleurs fonctionnant de même, et ainsi de suite jusqu'à n'avoir plus que le signal le plus élevé de tous.

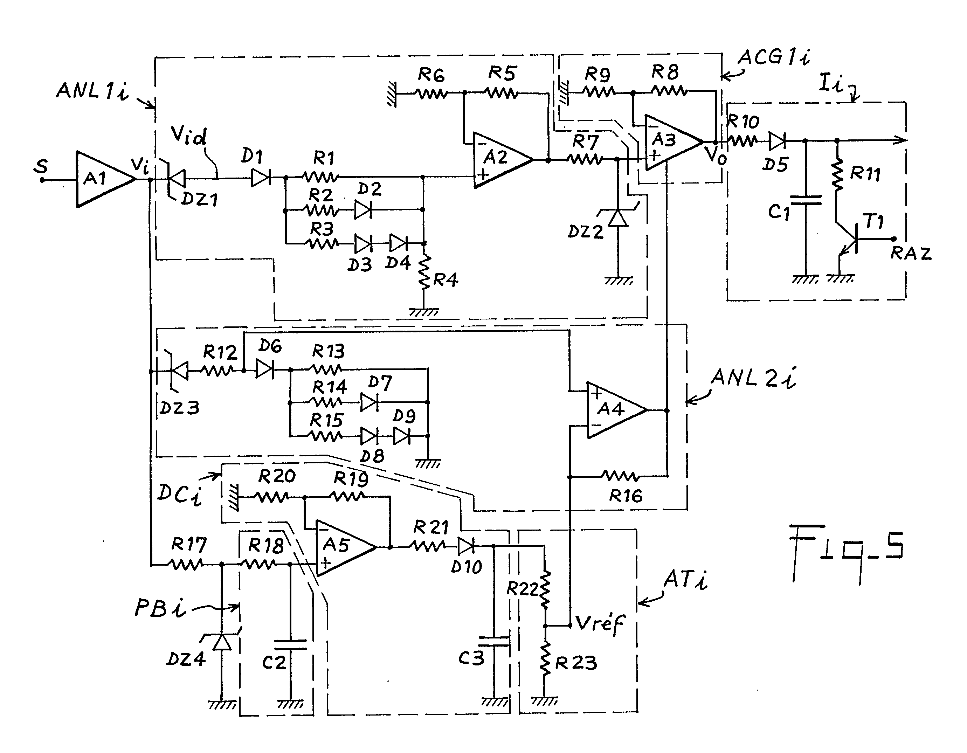

La figure 4 montre la structure d'un amplificateur APCi, qui comprend un premier amplificateur non linéaire ANL1i offrant un gain croissant lorsque l'amplitude de son signal d'entrée croît jusqu'à un niveau quantifié relatif à cette voie, suivi d'un amplificateur ACGi comportant une entrée de commande de gain, et un second amplificateur non linéaire ANL2i offrant un gain décroissant lorsque l'amplitude de son signal d'entrée croît au delà du niveau quantifié, les entrées des amplificateurs ANL1i et ANL2i recevant le signal Vi correspondant au signal S, après amplification ou atténuation dans un amplificateur A1 destiné à ajuster le niveau pour le traitement dans les circuits en aval. L'amplificateur ACGi est connecté à la sortie de l'amplificateur ANL1i et son gain est commandé par le signal de sortie de l'amplificateur ANL2i. Ce dernier reçoit par ailleurs une fraction de la tension de référence Vréf fournie par le circuit CA après traversée d'un atténuateur ATTi (figure 1) à partir du signal S, tandis que l'amplificateur ANL1i reçoit, à la place, 0 volt correspondant au niveau logique "0". Dans le cas de plus de deux niveaux, un pont diviseur à plusieurs sorties, alimenté d'un côté par la tension la plus basse, obtenue par un détecteur de crête négative, et de l'autre côté par le détecteur de crête positive fournissant Vréf, fournirait les niveaux quantifiés intermédiaires.

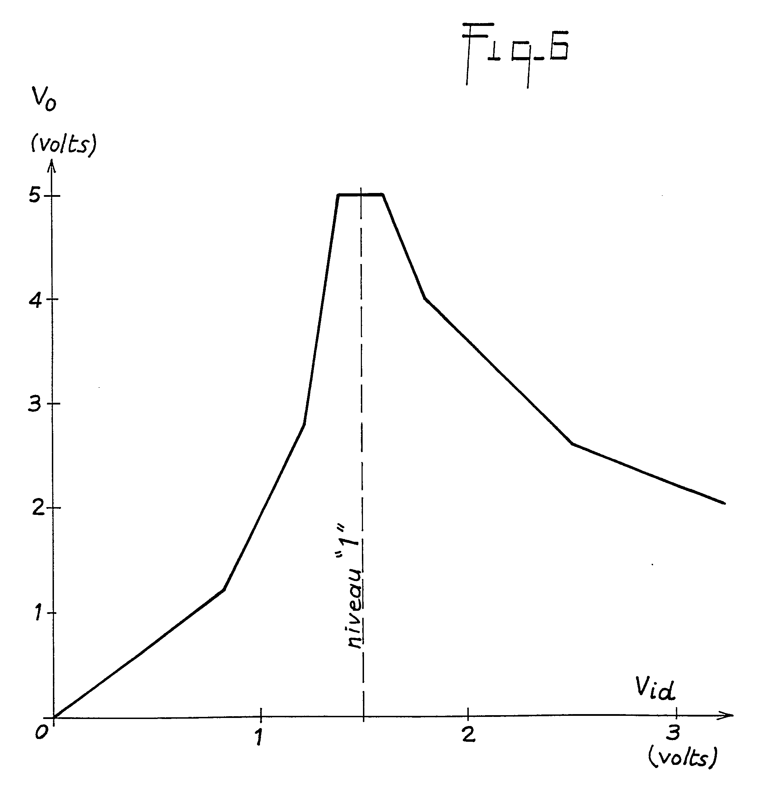

La figure 5 donne, à titre d'exemple, le schéma détaillé d'un amplificateur APCi. Un amplificateur A1 reçoit le signal S et fournit un signal Vi proportionnel, qui est appliqué en parallèle à deux chaînes composant l'amplificateur APCi et correspondant respectivement aux amplificateurs ANL1i et ANL2i, et au circuit CA de la figure 4.

La première chaîne comprend une diode Zener DZ1 et une diode D1 montée en série, la cathode de la diode D1 attaquant l'entrée d'un dipôle constitué de branches en parallèle formées d'éléments série : résistance R1, résistance R2 et diode D2, résistance R3 et diodes D3 et D4. Chacune des branches, dont le nombre n'est pas limité à trois, comporte une diode de plus que la précédente. La sortie du dipôle, reliée à une résistance R4 connectée à la masse, attaque l'entrée non inverseuse d'un amplificateur A2 auquel une rétroaction négative est appliquée par des résistances R5 et R6. La sortie de l'amplificateur A2 attaque, via une résistance série R7 reliée à la cathode d'une diode Zener DZ2 dont l'anode est reliée à la masse, l'entrée non inverseuse d'un amplificateur A3 comportant une entrée de commande de gain, correspondant à l'amplificateur AGCi de la figure 4, et fournissant un signal Vo.

La seconde chaîne, correspondant à l'amplificateur ANL2i de la figure 4, comprend une diode Zener DZ3 et une résistance R12 montées en série, cette dernière attaquant, d'une part, l'entrée non inverseuse d'un amplificateur A4, et d'autre part, via une diode D6, un dipôle à trois branches R13, R14 et D7, R15, D8 et D9, avec lequel elle forme un diviseur de tension non linéaire fournissant le signal appliqué à l'entrée non inverseuse de l'amplificateur A4.

L'entrée inverseuse de celui-ci, reliée à sa sortie par une résistance de rétroaction R16, reçoit la tension de référence Vréf du niveau "1" logique délivrée par la troisième chaîne, qui comprend une cellule de limitation d'amplitude formée par une résistance R17 et une diode Zener DZ4, une cellule de filtrage passe-bas formée par une résistance R18 et un condensateur C2, et un amplificateur A5 dont le gain est déterminé par des résistances R19 et R20. Cet amplificateur attaque, via une résistance série R21, un détecteur de crête formé par une diode D10 et un condensateur C3, dont la tension de sortie, atténuée par un pont diviseur résistif R22, R23, constitue la tension de référence Vréf égale au niveau "1" logique.

La sortie de l'amplificateur A3 attaque un circuit d'intégration correspondant à l'intégrateur Ii, formé d'une résistance série R10, d'une diode D5 et d'un condensateur C1 shunté par un circuit de décharge rapide de ce condensateur, composé d'une résistance R11 de faible valeur en série avec un transistor T1 commandé par le signal de remise à zéro RAZ.

En fonctionnement, le signal S se transforme, après amplification, en un signal Vi dont l'amplitude est nulle quand le niveau logique est "0", et égale par exemple à 3 volts quand le niveau logique est "1", abstraction faite des parasites perturbant ce signal. Les circuits de commande automatique de gain du récepteur R assurent une amplitude quasiment constante au signal Vi à l'état "1", indépendamment des fluctuations d'amplitude du signal transmis au récepteur.

Si l'on craignait une variation trop importante du niveau en sortie de l'amplificateur A1, malgré la commande automatique de gain de celui-ci, il faudrait alors pouvoir asservir les tensions de seuil créées par DZ1 et DZ3 aux variations lentes de niveau reçu. Pour ce faire, ces diodes Zener pourraient chacune être remplacées par un amplificateur AZ1 et AZ3 respectivement, à gain unité si l'on ne veut pas modifier le reste de la chaîne, recevant le signal Vi sur l'entrée non inverseuse, et le signal Vréf/2 ou Vréf respectivement, sur l'entrée inverseuse. Lorsque Vi dépasse la moitié du niveau logique "1", AZ1 reproduit les variations de Vi; de même AZ3 reproduit celles de Vi au delà de Vréf, qui correspond au niveau "1".

Revenant à la figure 5, à la sortie de la diode Zener DZ1 apparaît une tension Vid décalée de la tension nominale de cette diode Zener, choisie égale à la moitié de la dynamique normale entre les niveaux "0" et "1" du signal Vi, soit 1,5 V dans le présent exemple. La tension Vid est nulle tant que Vi est inférieure à 1,5 V. Lorsque la tension Vid croît à partir de zéro, la diode D1 devient conductrice lorsque sa tension de seuil (0,4 volt) est atteinte, puis les branches du dipôle non linéaire viennent successivement en conduction, à chaque fois que l'amplitude aux bornes de R1 croît de 0,4 volt. Il en résulte, à l'entrée de l'amplificateur A2, une montée en tension de plus en plus rapide, suivant une courbe à concavité tournée vers le haut. Cette tension est amplifiée par l'amplificateur A2, puis, après écrêtage par la diode Zener DZ2 lorsque le signal d'entrée dépasse le niveau "1" normal, appliquée à l'amplificateur A3. Cet écrêtage met une borne à l'effet de courbe de gain ascendante fourni par la première chaîne.

Si Vi continuait à croître au delà du niveau "1" normal, par absence d'écrêtage, ce serait la deuxième chaîne qui assurerait la redescente de l'amplitude du signal de sortie de l'amplificateur A3, par action sur l'entrée de commande de gain de ce dernier. L'amplificateur A4 de cette chaîne perçoit une tension nulle pour Vi inférieure à la tension Zener de DZ3, et au delà il perçoit le signal Vi diminué de la tension Zener de DZ3, cette tension Zener étant égale à l'amplitude pour le niveau logique "1" (3 volts). La branche du dipôle non linéaire formée par la diode D6 et la résistance R13 entre alors en conduction puis, successivement, la deuxième et la troisième branche, lorsque l'amplitude de Vi continue à croître. Il en résulte que la tension appliquée à l'entrée de l'amplificateur A4 croît moins vite que Vi. Quant à l'autre entrée de celui-ci, elle reçoit la tension Vréf délivrée par la troisième chaîne à partir du signal Vi, qui est égale à la tension normal entre niveaux "0" et "1" de ce signal (3 volts). Dès lors, l'amplificateur A4, qui agit à la manière d'un comparateur à seuil, applique à l'entrée de commande de gain de l'amplificateur A3 une tension variable qui fait chuter le gain de celui-ci, de sorte que sa tension de sortie Vo diminue suivant une courbe de décroissance à concavité tournée vers le haut, le signal de commande de gain variant moins vite à mesure que Vi s'éloigne du niveau quantifié considéré. Pour la simplicité de l'exposé, on a supposé une loi linéaire interne de l'amplificateur A3 entre sa commande de gain et la sortie. Si l'on dispose d'un amplificateur A3 ayant une loi de sensibilité de la sortie, vis-à-vis de la commande, qui décroisse, l'atténuateur variable comportant R13 pourrait être supprimé.

En résumé, lorsque l'amplitude de Vi croît à partir de zéro, Vo reste nul jusqu'à ce que Vi atteigne la moitié de la valeur normale Vréf du niveau "1", puis croît quasi exponentiellement de zéro à un maximum (5 volts par exemple) lorsque Vi croît de Vréf/2 à Vréf, puis décroît quasi exponentiellement du maximum à près de zéro lorsque Vi dépasse Vréf.

La figure 6 montre un exemple de courbe de réponse amplitude/amplitude que l'on peut obtenir avec un circuit tel que celui de la figure 5. La tension Vo de sortie de l'amplificateur A3 croît d'abord, en fonction de la tension Vid, suivant trois segments rectilignes de pente croissante (dus à l'amplificateur non linéaire ANL1i), puis après un palier horizontal centré sur la valeur de Vid correspondant au niveau logique "1" du signal S (dû à l'écrétage causé par la diode Zener DZ2), redescend suivant trois autres segments rectilignes de pente décroissante (dus à l'action de l'amplificateur non linéaire ANL2i sur l'amplificateur à gain commandé A3).

C'est cette tension Vo qui sert à charger le condensateur C1 de l'intégrateur Ii, selon un courant proportionnel à la tension, pendant la durée d'une période du signal S à la fin de laquelle le condensateur C1 est déchargé, après lecture et mémorisation dans une bascule D, par application au transistor T1 du signal RAZ constitué par une courte impulsion positive issue d'un circuit de base de temps synchronisé, en phase, sur l'horloge de réception du signal S. A la fin de chaque période, la tension aux bornes du condensateur C1 est significative de la quantité d'électricité qu'il a reçue, le courant de charge étant proportionnel au taux de corrélation existant entre le niveau logique auquel est affectée la voie de filtrage en amplitude considérée et l'amplitude instantanée du signal S reçu, entaché de bruit.

Le circuit de filtrage en amplitude d'un niveau logique déterminé, tel que représenté à la figure 5, peut être adapté à la détection d'un niveau logique quelconque. En effet, par un choix approprié des diodes Zener DZ1 et DZ3, il est possible de régler respectivement le seuil de détection inter niveaux adjacents et le début de la redescente de la courbe de réponse après le palier sommital, la pente de descente de celle-ci étant réglable par modification du gain de l'amplificateur A4, compte tenu de la sensibilité de l'entrée de commande de gain de l'amplificateur A3 et de l'atténuation du pont diviseur non linéaire placé à l'entrée de l'amplificateur A4. Dans le cas où l'un des niveaux logiques est codé par un niveau physique donnant une tension dite nulle, cette dernière est en fait arbitraire et peut être décalée par addition d'une tension continue dans un amplificateur. On peut ainsi prévoir que tous les détecteurs de niveaux logiques soient précédés d'un circuit de translation de niveau continu qui ramène, dans une même plage de fonctionnement, toutes les voies de détection, les diodes Zener DZ1 et DZ3 ayant toujours les mêmes valeurs de tension d'une voie à l'autre. Ceci présente l'avantage d'avoir des voies strictement identiques, donc ayant les mêmes constantes d'intégration.

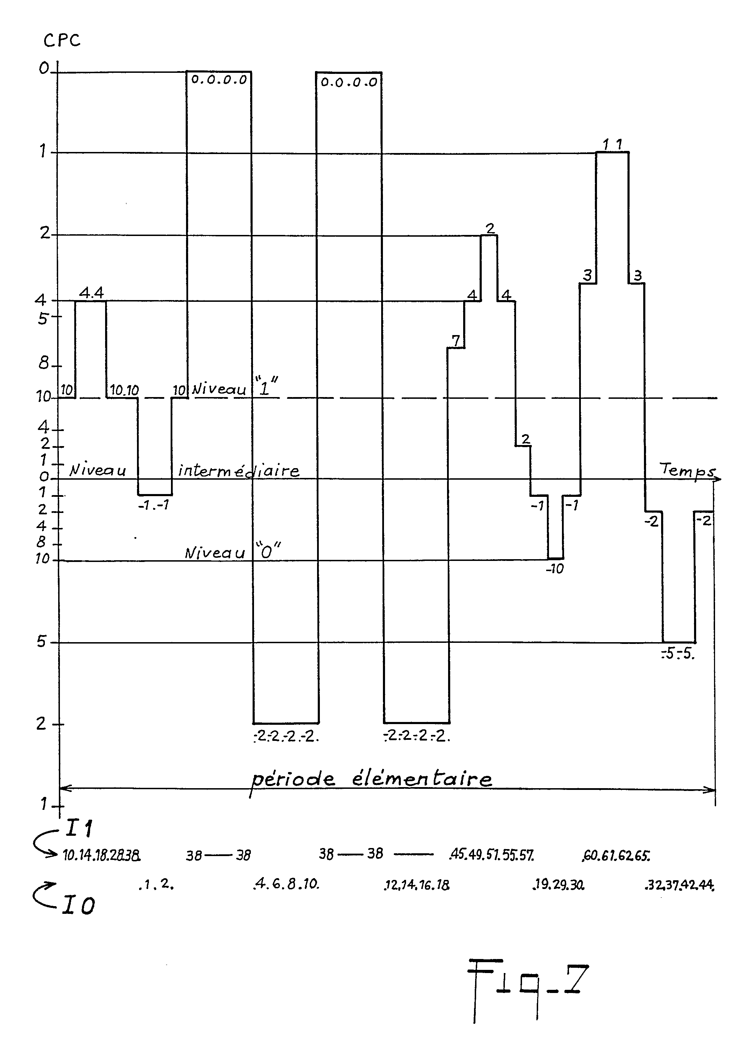

Le diagramme de la figure 7 montre un exemple d'un niveau logique "1" durant une période élémentaire d'un signal S binaire, auquel se superposent cinq paires d'impulsions alternatives parasites de grandeurs diverses. Le taux de prise en compte est indiqué, en ordonnées, par un chiffre arbitraire croissant de 0 à 10 (maximum) à partir du niveau intermédiaire jusqu'au niveau logique "0" (ou "1") exact, puis décroissant au delà, les lois de prise en compte étant symétriques pour les deux niveaux logiques.

Le signal S est fortement perturbé par du bruit alternatif; pour simplifier, on suppose que ce dernier est écrêté par le récepteur lorsqu'il est de très grande amplitude, et est donc assimilable à une paire d'impulsions rectangulaires opposées; dans le cas de sinusoïde de bruit de plus faible amplitude, on l'assimile à une succession discrète de niveaux. On a décomposé la période élémentaire en 40 instants élémentaires ayant chacun son niveau de bruit. Le premier exemple consiste à supposer un signal S théoriquement au niveau logique "1".

Le signal S, dont l'amplitude initiale correspond exactement au niveau "1", est d'abord pris en compte avec le taux maximal 10; puis la première impulsion parasite positive le fait passer dans une zone où ne lui est plus appliqué que le coefficient 4; il revient ensuite au niveau "1" normal, passe de l'autre côté du niveau intermédiaire où il est pris par l'autre voie N0, affectée au niveau "0", avec le coefficient -1 (noté en négatif pour indiquer qu'il s'agit de l'autre voie), puis revient au niveau "1" normal. Ces processus se poursuivent durant le déroulement dans le temps de la période élémentaire du signal S, correspondant au niveau "1", tandis que les intégrateurs Ii des voies N0 et N1 accumulent des charges électriques successives ainsi qu'il est indiqué au bas du diagramme, où le nombre cumulé des comptages apparaît. En fin de période, l'intégrateur I0 de la voie N0 est arrivé au chiffre de 44 et l'intégrateur I1 de la voie N1 au chiffre de 65, soit un rapport de 65/44 = 1,5. Dès lors, le comparateur CP (figure 1) indique la présence d'un niveau "1" dans le signal S, malgré les très fortes perturbations subies par celui-ci.

Un deuxième exemple consiste à supposer un niveau transmis "0" logique, avec le même bruit. Il suffit de retourner l'axe vertical de la figure 7, la référence "niveau intermédiaire" restant inchangée, et de permuter les appellations "niveau 0" et "niveau 1". On voit ainsi que maintenant c'est la voie du niveau "0" qui compte 65 contre 44 pour la voie du "1".

Le troisième exemple, a contrario, est celui d'un intégrateur classique écrêté, n'appliquant pas la présente invention, constitué d'une seule chaîne d'amplification linéaire suivie d'un intégrateur , avec une dynamique du signal d'entrée allant de 0 à 150% du niveau "1" quantifié. Les mêmes parasites, appliqués à un niveau logique "0", donnent alors 201 en fin d'intégration, ce qui dépasse le seuil de décision = 200 et aboutit à la détection d'un niveau "1", ce qui est faux.

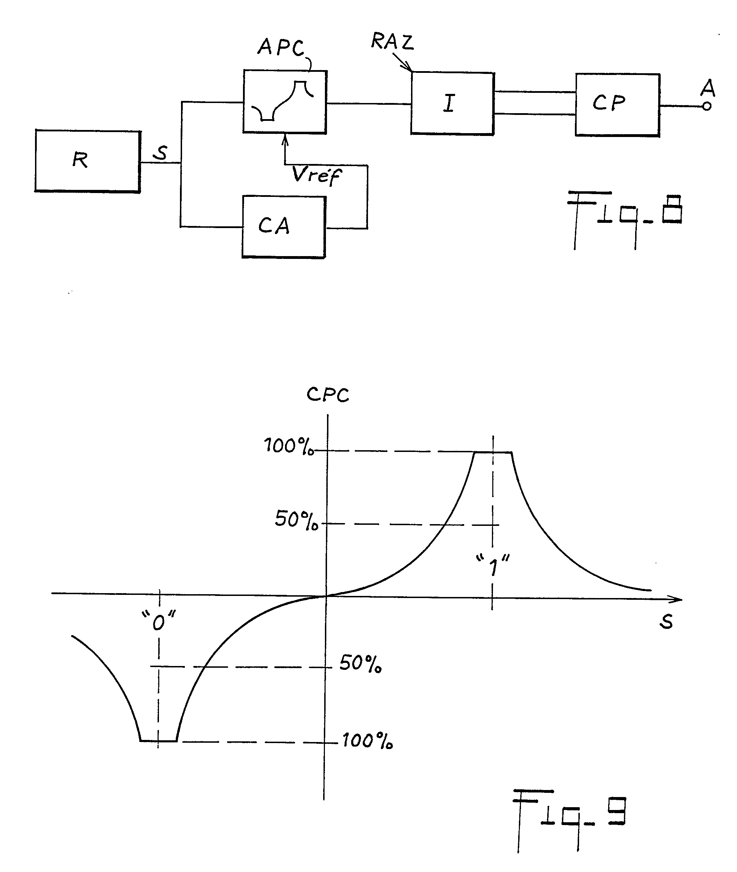

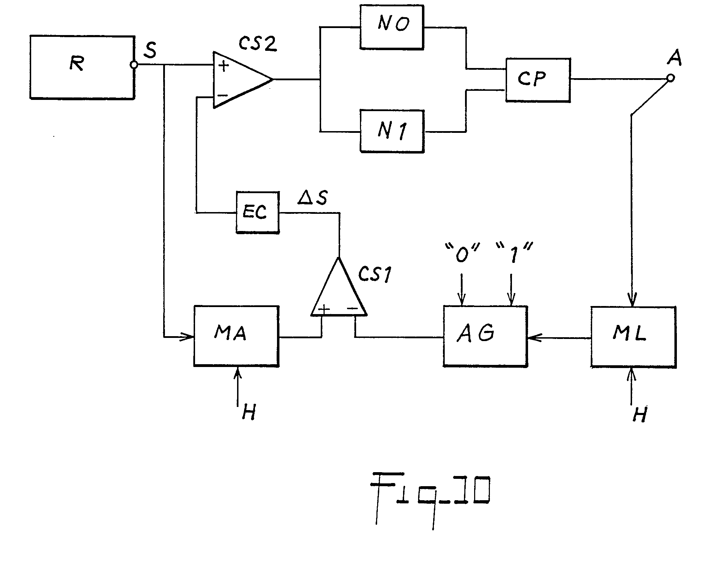

Revenant à l'invention, dans le cas considéré ici d'un codage logique à deux niveaux du signal S, les deux voies N0 et N1 de traitement des niveaux logiques "0" et "1" peuvent aboutir, conformément à ce qui précède, chacune à un condensateur d'intégration C1i propre; les tensions aux bornes des deux condensateurs C1i sont alors comparées à la fin de chaque période élémentaire du signal S et la tension la plus élevée désigne la voie correspondant au niveau logique "0" ou "1" à retenir. Il est possible aussi de n'utiliser qu'un seul condensateur d'intégration, chargé par une voie et déchargé par l'autre, sa tension de repos étant forcée, au début de chaque période élémentaire du signal S, à une valeur située à mi-distance des tensions maximales, de sorte que la variation intégrée par rapport à cette tension indique, en fin de période, quel est le niveau logique le plus probable qui doit donc être retenu. Cette disposition, qui évite d'avoir à utiliser deux condensateurs de valeur rigoureusement égale, donc très précis et, par suite, coûteux, est illustrée par le schéma de la figure 8. Elle met en oeuvre une courbe de prise en compte à symétrie par rapport à la moitié du niveau "1" logique, telle que représentée à la figure 9.

Le circuit de filtrage du type décrit présente tout son intérêt dans le cas où le signal reçu S est accompagné de parasites brefs et de grande amplitude, celle-ci pouvant dépasser l'amplitude du signal S proprement dit. De tels parasites ne sont en effet pris en compte qu'à un degré réduit, de sorte qu'ils n'apporteront qu'une faible charge aux condensateurs d'intégration.

En ce qui concerne le bruit à basse fréquence, par rapport à la période élémentaire du signal utile S, on observera qu'il ajoute à ce dernier une composante de niveau quasi constant pendant la durée de chaque période. Pour éliminer cette cause d'erreur, un circuit de compensation peut être prévu (figure 10). Celui-ci comprend une mémoire logique ML qui mémorise, à la fin de chaque période, sous la commande d'un signal d'horloge H, le niveau logique indiqué par le comparateur CP placé à la sortie des voies N0 et N1 (le signal S étant supposé être codé en binaire), et une mémoire analogique MA mémorisant au même moment le niveau instantané du signal S reçu après filtrage HF, comme il sortirait d'un détecteur classique précédemment mentionné. Selon que l'on a détecté un "0" ou un "1" dans ce signal, l'erreur basse fréquence du signal reçu à ce moment peut être reconstituée en faisant la différence, dans un circuit soustracteur CS1, entre la valeur analogique mémorisée dans la mémoire MA et une tension correspondant soit au niveau "0", soit au niveau "1" engendrée comme expliqué pour le signal Vréf, et traversant un aiguilleur AG commandé en fonction du contenu de la mémoire logique ML. Le signal d'erreur ΔS ainsi formé est retranché du signal S par un circuit soustracteur CS2 interposé entre le récepteur R et les voies N0 et N1 de détection de niveaux logiques. Afin d'éviter un blocage de l'ensemble du circuit en cas d'erreur de détection conduisant à une correction dans le mauvais sens, l'amplitude du signal de correction ΔS peut être limitée par un écrêteur EC.

Une variante de réalisation de l'invention consiste à ne pas écrêter le signal en entrée de A3 ou ailleurs, lorsqu'il atteint son niveau normal, de le laisser croître, et d'appliquer un effet atténuateur accru en augmentant le gain de A4. Le signal Vid devra cependant être écrêté au delà d'un certain niveau si l'on ne peut garantir une dynamique suffisante de commande de décroissance du gain de l'amplificateur A3 au travers de son entrée de commande de gain.

L'exemple donné, à partir d'éléments simples, peut évidemment être modifié sans sortir du cadre de la présente invention. En particulier, la courbe de réponse à concavité tournée vers le haut, à allure quasi exponentielle, peut être obtenue en utilisant des amplificateurs non linéaires, A3 pouvant avoir une fonction d'amplificateur exponentiel sur son entrée de signal et un effet à allure logarithmique de commande pour diminuer le gain. De même A4 peut être un amplificateur à gain logarithmique. Un seuil peut être appliqué à ces amplificateurs.

La variation de gain obtenue dans l'amplificateur A3 peut être obtenue par tout autre moyen, par exemple par utilisation d'un pont diviseur d'éléments à état de conduction variable (diodes, transistors ou autres) ou par modification du point de fonctionnement d'un élément, par exemple par modification de la tension de grille d'un transistor MOS, ce qui modifie la résistance du canal MOS.

L'obtention d'une courbe de réponse non linéaire à concavité tournée vers le haut peut être obtenue par d'autres montages que le pont diviseur variable indiqué précédemment. On peut par exemple utiliser un amplificateur opérationnel logarithmique dont la sortie est rebouclée vers l'entrée au travers d'un amplificateur linéaire. Le produit des gains des deux amplificateurs étant unitaire, l'amplificateur linéaire réalise donc une amplification en inverse de logarithme.

L'exemple donné décrit un traitement effectué électriquement et de façon analogique. Il est bien évident qu'un traitement numérique rapide est aussi possible, avec, par exemple, un processeur de traitement du signal.

Par ailleurs, la grandeur physique obtenue en sortie du récepteur R peut être autre qu'électrique, par exemple optique et traitée au travers de circuits optiques, dont certains à effet non linéaire pour effectuer le filtrage dit en amplitude. Un autre moyen, pour atténuer de façon variable le signal, est d'utiliser une fréquence optique monochromatique issue d'un laser, et de l'injecter dans un circuit où le rayon est partagé en deux faisceaux égaux, qui subissent un retard commandable propre à chacun, par exemple par application d'un champ électrique sur le conduit de lumière, ce qui modifie l'indice, donc la vitesse de propagation. La recomposition vectorielle en sortie du circuit aboutit à un signal pouvant être modulé de 0 à 100% selon le déphasage relatif. De tels circuits existent sous forme de circuits intégrés.

Par ailleurs, il peut y avoir changement de la grandeur physique modulée et/ou du type de modulation, que ce soit dans le récepteur R ou dans les amplificateurs, qui peuvent être des transducteurs. Ainsi, une modulation de fréquence optique peut être traduite en une modulation d'amplitude électrique.

L'invention s'applique, entre autres, à des liaisons à longue distance par câble électrique, par fibre optique, par radio, etc. Pour les récepteurs optiques, où le bruit intrinsèque dû aux composants tels que diode PIN ou à avalanche, résistances, transistors ou pré-amplificateurs, limite le seuil minimum de réception, l'application d'un tel procédé permet de diminuer nettement ce seuil.

**Revendications**

1. Procédé de filtrage d'un signal numérique périodique à N (supérieur ou égal à 2) niveaux logiques auquel est superposé du bruit,
caractérisé par le fait que la probabilité instantanée de chaque niveau logique est traduite sous la forme de N signaux ayant une amplitude maximale lorsque la valeur modulée du signal instantané reçu est égale à la valeur normale de ce niveau logique, amplitude qui décroît, de par l'application d'un coefficient de prise en compte, lorsque la valeur instantanée reçue s'écarte de la valeur normale de ce niveau logique, la succession de ces amplitudes relative à chaque niveau logique recherché étant intégrée pendant la durée de la période élémentaire de modulation du signal numérique reçu, le niveau logique reconnu étant celui correspondant à celui pour lequel l'intégrale est la plus grande.

2. Procédé selon la revendication 1, caractérisé par le fait que le coefficient de prise en compte varie, en fonction de la valeur du signal, suivant une courbe à concavité tournée vers le haut de part et d'autre de sa valeur maximale.

3. Procédé selon la revendication 1 ou 2, caractérisé par le fait que le coefficient de prise en compte reste constant au voisinage de son maximum sur une petite plage de valeur du signal.

4. Procédé selon l'une quelconque des revendications 1 à 3, caractérisé par le fait que le coefficient de prise en compte relatif à un niveau de codage déterminé est voisin de sa valeur minimale pour les valeurs du signal plus proches d'un autre niveau de codage.

5. Procédé selon l'une quelconque des revendications 1 à 4, caractérisé par le fait qu'il y a changement de nature de la grandeur physique modulée et/ou du type de modulation dans l'une ou dans plusieurs des étapes du traitement appliqué au signal.

6. Dispositif permettant de mettre en oeuvre le procédé selon l'une quelconque des revendications 1 à 5,
caractérisé par le fait qu'il comporte :
- des voies (N0, N1, ...) de filtrage en amplitude auxquelles le signal perturbé (S) est appliqué, en nombre égal à celui des niveaux de codage du signal, chacune comprenant un amplificateur (APC) dont la courbe de réponse en fonction de la valeur modulée du signal d'entrée présente un maximum pour la valeur d'entrée égale au niveau considéré, et une décroissance monotone de part et d'autre du maximum,
- un circuit d'intégration (CI) des signaux filtrés issus desdits amplificateurs (APC), et
- un circuit comparateur (CP) effectuant la comparaison des signaux intégrés et indiquant, à la fin de chaque période élémentaire de codage du signal, le niveau de codage respectif le plus probable de ce signal dans cette période.

7. Dispositif selon la revendication 6, caractérisé par le fait qu'il comporte en outre deux circuits auxiliaires (CA) produisant deux tensions de référence (Vréf) égales aux valeurs quantifiées extrêmes du signal (S), lesquelles sont appliquées, après division éventuelle, à l'amplificateur (APC) de chaque voie de filtrage (N0, N1, ...).

8. Dispositif selon la revendication 6 ou 7, caractérisé par le fait que l'amplificateur (APC) de chaque voie de filtrage comprend :
- un premier amplificateur non linéaire (ANL1) à gain croissant lorsque la valeur d'entrée croît jusqu'à la valeur du niveau de codage considéré,
- un deuxième amplificateur non linéaire (ANL2) à gain décroissant lorsque la valeur d'entrée croît au delà de la valeur du niveau considéré,

lesdits premier et deuxième amplificateurs non linéaires recevant tous deux le signal à filtrer (S), et
- un amplificateur à commande de gain (ACG) qui est attaqué par le premier amplificateur non linéaire (ANL1) et dont le gain est commandé par le deuxième amplificateur non linéaire (ANL2), le signal filtré étant disponible à la sortie de l'amplificateur à commande de gain (ACG).

9. Dispositif selon les revendications 7 et 8, caractérisé par le fait que chaque tension de référence (Vréf) ou une fraction de celle-ci est appliquée au deuxième amplificateur non linéaire (ANL2) de chaque voie de filtrage.

10. Dispositif selon l'une quelconque des revendications 6 à 9, caractérisé par le fait que le circuit d'intégration (CI) est composé de plusieurs intégrateurs (Ii), chacun étant propre à une voie de filtrage respective.

11. Dispositif selon l'une quelconque des revendications 6 à 9, caractérisé par le fait que, dans le cas d'un signal à codage binaire, le circuit d'intégration (CI) est formé d'un unique intégrateur commun aux deux voies de filtrage et actionné symétriquement en sens opposés par les signaux de sortie de celles-ci, le circuit comparateur effectuant la comparaison du signal issu de cet intégrateur et de la tension de repos.

12. Dispositif selon l'une quelconque des revendications 6 à 11, caractérisé par le fait qu'il comporte en outre un circuit assurant l'addition au signal à filtrer d'une tension d'erreur (ΔS) proportionnelle à l'écart constaté en fin de période entre l'amplitude théorique, correspondant au niveau de codage reconnu, et l'amplitude réelle après filtrage HF, déterminé par le circuit comparateur, cette tension d'erreur imprimant au signal un décalage qui tend à réduire l'ampleur de l'écart.

Fig.1

Fig.2

Fig-3

Fig-4

FIG.5

Fig.6

Fig_7

Fig. 8

Fig. 9

Fig_10

**Office européen des brevets**

# RAPPORT DE RECHERCHE EUROPEENNE

Numero de la demande

EP 90 40 0767

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 157 598 (NEC)<br>* Page 3, lignes 10-16; revendication 1; figure 3 * | 1-12 | H 04 L 25/49 |
| A | DE-A-3 043 372 (SIEMENS)<br>* Page 8, lignes 29-36; figure 3 * | 1,6 | |
| A | US-A-4 317 080 (W.F. ACKER)<br>* Colonne 1, ligne 65 - colonne 2, ligne 10; figure * | 1 | |

|  |  |
|---|---|
| | **DOMAINES TECHNIQUES RECHERCHES (Int. Cl.5)** |
| | H 04 L |

Le présent rapport a été établi pour toutes les revendications

| Lieu de la recherche | Date d'achèvement de la recherche | Examinateur |
|---|---|---|
| LA HAYE | 15-06-1990 | CRETAINE P.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................
& : membre de la même famille, document correspondant

EPO FORM 1503 03.82 (P0402)